# FASCICULE DE BREVET EUROPEEN

(11) **EP 3 102 448 B1**
(45) Date de publication et mention de la délivrance du brevet: **09.01.2019**
(21) Numéro de dépôt: 15727431.7
(22) Date de dépôt: 28.04.2015
(51) Int. Cl.: B60J 10/00

(54) **JOINT DE COULISSE POUR VITRAGE DE VEHICULE ET MODULE D'ETANCHEITE INCORPORANT DES MOYENS DE GUIDAGE DU VITRAGE DANS LE JOINT ET UN ELEMENT DU CADRE DE PORTE**
GLEITDICHTUNGSELEMENT FÜR EINE GLASSCHEIBE EINES FAHRZEUGES UND DICHTUNGSMODULE MIT GLASGLEITDICHTUNGSMITTEL UND TÜREINFASSUNGSELEMENT.
SEAL FOR SLIDING GLASS FOR A VEHICLE AND SEALING MODULE HAVING GLASS GUIDING MEANS AND A DOOR FRAME ELEMENT

(43) Date de publication de la demande: 14.12.2016
(73) Titulaire: HUTCHINSON, 75008 Paris (FR)
(72) Inventeur: BLOTTIAU, Olivier, 45120 Cepoy (FR)
(74) Mandataire: Gevers & Orès
(86) Numéro de dépôt international: PCT/FR2015/051147
(87) Numéro de publication internationale: WO 2016/174315

(56) Documents cités:
- EP-A2- 0 068 367
- EP-A2- 0 083 696
- FR-A1- 2 747 345
- US-A- 4 662 113
- US-A1- 2006 021 282
- US-A1- 2006 037 249

## Description

La présente invention concerne un joint de coulisse élastomère adapté pour recevoir un vitrage coulissant d'une porte latérale avant ou arrière de véhicule automobile, et un module d'étanchéité d'une telle porte latérale comprenant un tel joint, un tel vitrage monté coulissant dans le joint et des moyens de guidage du vitrage solidaires d'une face interne du vitrage et aptes à le guider de manière longitudinalement déportée en coulissement, directement dans une rainure formée dans le joint. L'invention s'applique au guidage d'un tel vitrage en affleurement latéral avec une surface externe d'un élément vertical de bordure d'un cadre de la porte adjacent au vitrage choisi parmi un montant du cadre et un enjoliveur externe vertical équipant ce cadre tel qu'un pied-milieu du véhicule (cet affleurement du vitrage par rapport à cet élément vertical est communément appelé « flush » en anglais, i.e. avec la face extérieure du vitrage qui se situe dans le même plan latéral que celle de cet élément vertical).

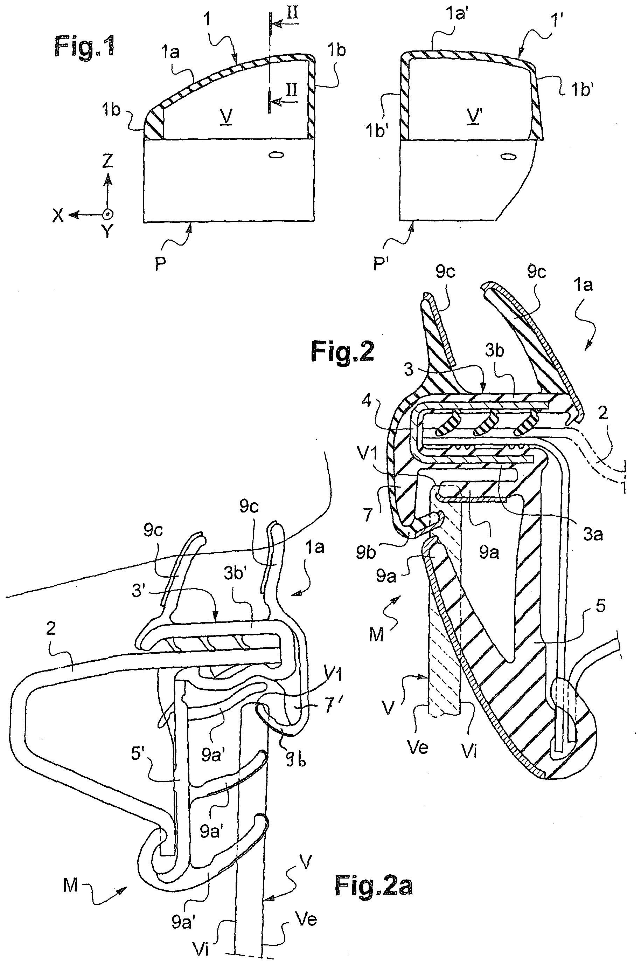

Dans ce qui suit, on utilisera de manière usuelle les qualificatifs « axialement interne » et « axialement externe » pour désigner la position d'un élément du module d'étanchéité latéralement vers l'intérieur et vers l'extérieur du véhicule automobile, respectivement, en référence à la direction axiale Y qui est par définition perpendiculaire au plan XZ défini par la direction horizontale longitudinale X et par la direction verticale Z du véhicule (voir la figure 1a annexée à la présente description).

Il est connu de monter sur un véhicule automobile un tel joint de coulisse dont un ou chaque brin ascendant présente une section transversale sensiblement en forme de U qui comprend deux branches axialement interne et externe reliées entre elles par une branche de liaison axiale, et qui reçoit un vitrage en affleurement latéral avec le montant du cadre de la porte correspondante ou avec l'enjoliveur vertical équipant ce cadre (avec dans certains cas ce cadre qui est masqué par le vitrage). On utilise à cet effet des moyens de guidage déporté du vitrage en coulissement dans un rail du cadre de porte ou dans une rainure du joint de coulisse, ces moyens de guidage étant usuellement constitués de pions ou d'ergots qui sont déportés dans la direction longitudinale X du véhicule et qui sont fixés sur la face interne du vitrage à proximité d'un bord vertical du vitrage.

On peut par exemple citer à titre de module d'étanchéité procurant un tel vitrage « flush » le document US-A1-2006/0037249 qui enseigne de faire coulisser de manière longitudinalement déportée un tel ergot qui est incurvé axialement vers l'intérieur par un crochet formant coulisseau uniquement à proximité des extrémités inférieure et supérieure d'un brin ascendant en U du joint de coulisse, dans une rainure de la branche axialement interne de ce brin. L'ergot de guidage recouvre à la fois la face interne et la tranche du vitrage, et le brin ascendant dans lequel coulisse ce crochet appuie sur le vitrage uniquement par une lèvre d'extrémité de sa branche externe qui est appliquée sur la face externe du vitrage. Quant à la branche interne, elle est uniquement appliquée sur la face interne de l'ergot.

Le document US-A1-2006/0021282 enseigne également pour l'obtention d'un tel vitrage « flush » de faire coulisser un crochet axial d'un ergot longitudinalement déporté et incurvé axialement vers l'intérieur dans une rainure formée dans la branche interne d'un brin ascendant en U d'un joint de coulisse, avec les branches interne et externe de ce brin qui appuie sur l'ergot mais sans contact étanche de ces branches avec le vitrage. En particulier, la branche externe se termine à distance de la tranche du vitrage, sans recouvrir cette tranche ni la face externe de ce dernier.

Un inconvénient majeur des modules d'étanchéité proposés dans ces documents réside dans le coulissement du crochet de l'ergot dans la branche interne du brin ascendant en U du joint de coulisse, qui augmente l'encombrement dans la direction axiale Y de ce brin et rend difficile, voire impossible, le montage de la lèvre d'étanchéité terminale de la branche externe contre la tranche du vitrage de sorte à masquer le jeu ou interstice entre cette tranche et l'enjoliveur externe vertical adjacent et exercer une pression donc une étanchéité suffisantes sur le vitrage.

Le document EP-A2-0 068 367 le plus proche de l'art antérieur, décrit une structure de joint pour un vitrage mobile, la structure de joint comportant un matériau unique et n'étant pas configuré pour garantir un guidage et un positionnement optimum à ce vitrage.

Un but de la présente invention telle que défini dans la revendication 1, est de proposer un joint de coulisse élastomère adapté pour recevoir un vitrage coulissant d'une porte latérale de véhicule automobile qui remédie notamment à cet inconvénient, le vitrage étant monté en affleurement latéral avec une surface externe d'un élément vertical de bordure d'un cadre de la porte adjacent au vitrage choisi parmi un montant dudit cadre et un enjoliveur externe vertical équipant ledit cadre, le joint comprenant au moins un brin ascendant et un brin supérieur, ledit au moins un brin ascendant présentant d'un seul tenant une branche axialement externe apte à être montée d'une manière étanche au contact dudit élément vertical et du vitrage, une branche axialement interne apte à être montée sur ledit cadre, et une branche de liaison reliant ladite branche axialement externe à ladite branche axialement interne, le joint comprenant une rainure apte à recevoir en coulissement vertical des moyens de guidage du vitrage solidaires d'une face interne du vitrage.

A cet effet, un joint de coulisse selon l'invention est tel que ladite rainure est formée sur ladite branche axialement externe en étant adaptée pour se trouver en regard dudit élément vertical.

On notera que la formation de la rainure dudit au moins un brin ascendant du joint, qui reçoit en coulissement les moyens de guidage du vitrage, spécifiquement dans la branche externe de ce brin, permet de conserver suffisamment d'espace latéral dans la direction axiale Y pour appliquer d'une manière étanche la lèvre d'extrémité de cette branche externe contre la tranche du vitrage, contrairement à l'art antérieur représenté par les deux documents précités où la rainure était formée dans la branche interne.

Ainsi et grâce à l'encombrement latéral réduit dans la direction Y du joint dans ledit au moins un brin ascendant, selon une autre caractéristique de l'invention, ladite branche axialement externe peut comprendre au-delà de ladite rainure une zone souple d'extrémité externe apte à être montée en contact étanche contre une tranche verticale du vitrage, de sorte que ladite zone souple d'extrémité externe masque tout jeu ou interstice de montage entre le vitrage et ledit élément vertical.

On notera également que le coulissement des moyens de guidage directement dans ledit au moins un brin ascendant formé d'un seul tenant (i.e. sans rail rapporté sur ce joint pour réaliser ce coulissement) permet d'assurer à la fois :
- cette étanchéité améliorée par rapport au vitrage monté affleurant vis-à-vis de ladite surface externe dudit élément vertical par application étanche du joint sur la tranche verticale du vitrage, laquelle est rendue possible par le guidage longitudinalement déporté du vitrage par lesdits moyens qui dépassent du bord vertical correspondant du vitrage dans la direction longitudinale X (comme cela sera détaillé ci-après), et
- un contact étanche continu dudit au moins un brin ascendant avec la face interne du vitrage en deçà desdits moyens de guidage (voir également ci-après).

Selon une autre caractéristique de l'invention, ladite rainure peut s'étendre de manière sensiblement axiale en étant formée d'au moins un matériau élastomère rigide entre ladite branche de liaison et une zone rigide d'appui que comprend ladite branche axialement externe et qui est située en deçà de ladite zone souple d'extrémité externe, ladite zone rigide d'appui faisant saillie axialement vers l'intérieur et étant apte à appuyer de manière étanche sur une face axialement externe desdits moyens de guidage.

Avantageusement, ladite zone souple d'extrémité externe peut prolonger ladite zone rigide d'appui en formant une lèvre d'étanchéité externe qui comprend :
- une première portion qui est dirigée axialement vers l'extérieur et qui est apte à être montée de manière étanche au contact d'une tranche verticale dudit élément vertical, et
- une seconde portion d'extrémité qui est dirigée axialement vers l'intérieur et qui est apte à être montée de manière étanche au contact de ladite tranche verticale du vitrage.

Encore plus avantageusement, ladite zone souple d'extrémité externe n'est pas apte à être montée au contact d'une face externe du vitrage, contrairement au document US-A1-2006/0037249 précité.

On notera que ledit au moins un brin ascendant d'un joint de coulisse selon l'invention peut être réalisé en tous matériaux élastomères pouvant être de type caoutchoucs et/ou élastomères thermoplastiques (TPE en abrégé, par exemple des vulcanisats thermoplastiques, TPV en abrégé ou d'autres TPE tels que des TPS ou des TPO, à titre non limitatif) plus ou moins rigides et pouvant être chargés ou non. Comme expliqué plus en détail ci-après, on utilise de préférence pour les branches interne, externe et de liaison une pluralité de tels matériaux élastomères définissant différentes zones respectivement souples (notamment pour des lèvres d'étanchéité ou de montage équipant les branches interne et externe) et plus rigides (notamment pour les majeures parties de la branche interne, de la branche de liaison et pour ladite rainure de la branche externe).

Selon une autre caractéristique préférentielle de l'invention, ladite zone rigide d'appui comprend un bourrelet axial qui forme avec ladite branche de liaison également axiale des bords de ladite rainure, laquelle est apte à recevoir en coulissement un crochet terminal desdits moyens de guidage et comprend un fond optionnellement recouvert d'un revêtement anti-friction. Ce revêtement peut être formé de toute couche glissante connue identique ou différente de celle utilisée pour les diverses lèvres d'étanchéité équipant lesdites branches axialement interne et externe, comme par exemple du polyéthylène haute densité (PEHD) ou du polyéthylène réticulé (PER), à titre non limitatif.

Avantageusement, ladite branche axialement externe est apte à coopérer de manière déportée dans la direction longitudinale du véhicule avec lesdits moyens de guidage pour guider simultanément le coulissement du vitrage dans ladite direction longitudinale et en outre dans une direction axiale du véhicule.

On notera que l'on peut, grâce à ce guidage déporté, maîtriser de façon raisonnable et non isostatique l'amplitude des légers déplacements simultanés du vitrage dans ces deux directions horizontales X et Y précitées lors de son coulissement vertical, avec en particulier un contrôle des déplacements vers l'avant et vers l'arrière dans cette direction longitudinale X (i.e. déplacements usuellement dits en X+ et en X-, en abrégé), ce qui n'était en général pas possible dans l'art antérieur précité.

Grâce à la présente invention, on peut avantageusement maîtriser le jeu ou espace interstitiel existant entre la tranche arrondie du vitrage et ladite surface externe dudit élément vertical, ce qui permet d'éviter d'avoir une forme indésirable de type « queue de billard » et/ou un tel jeu de dimensions très différentes entre le bord avant et le bord arrière du vitrage.

Selon une autre caractéristique de l'invention, le joint peut présenter globalement une forme de U asymétrique, et ladite branche axialement interne peut se terminer par une zone souple d'extrémité interne qui est apte à être montée de manière étanche sur ladite face interne du vitrage à l'écart desdits moyens de guidage et qui raccorde ledit au moins un brin ascendant audit brin supérieur avec une continuité de contact étanche sur ladite face interne du vitrage en dépit de la présence desdits moyens de guidage.

On notera que cette continuité du contact du joint entre ledit au moins un brin ascendant et le brin supérieur sur la face interne du vitrage en deçà des moyens de vitrage fixés à cette face, permet un raccordement entre ces brins dans un même plan et donc sans avoir à gérer le moindre décalage spatial associé à un contact du joint sur les moyens de guidage pour ledit au moins un brin ascendant et sur le vitrage lui-même pour le brin supérieur. En effet, un tel décalage constituerait un défaut d'étanchéité du joint de coulisse sur le vitrage qui est ainsi évité par la présente invention.

Avantageusement, ladite zone souple d'extrémité interne peut comprendre une lèvre d'étanchéité interne qui s'étend de manière oblique en direction de ladite branche de liaison à partir d'une portion de ladite branche axialement interne apte à être montée sur ledit cadre de la porte, ladite portion comprenant par exemple une gorge destinée à être montée sur un enjoliveur interne dudit cadre de porte ou bien étant recourbée directement contre ledit cadre.

Un module d'étanchéité selon l'invention d'une porte latérale de véhicule automobile comprend un joint de coulisse, un vitrage de ladite porte monté coulissant dans le joint et des moyens de guidage du vitrage qui sont solidaires d'une face interne du vitrage à proximité d'au moins un bord vertical du vitrage et qui sont aptes à guider le vitrage de manière longitudinalement déportée en coulissement directement dans une rainure formée dans le joint, de sorte que le vitrage soit apte à être monté en affleurement latéral avec une surface externe d'un élément vertical de bordure d'un cadre de la porte adjacent au vitrage choisi parmi un montant dudit cadre et un enjoliveur externe vertical équipant ledit cadre.

Selon l'invention, le module d'étanchéité est caractérisé en ce que ce joint est tel que défini ci-dessus.

Selon une autre caractéristique de l'invention, lesdits moyens de guidage peuvent être formés d'au moins un coulisseau s'étendant de manière continue ou discontinue à partir de ladite face interne du vitrage sur au moins une zone supérieure dudit au moins un bord vertical, le vitrage comprenant une tranche verticale qui n'est avantageusement pas recouverte par ledit au moins un coulisseau et contre laquelle est appliquée de manière étanche ladite branche axialement externe du joint.

On notera que le ou chaque coulisseau fixé sur la vitre peut ainsi s'étendre d'un seul tenant (si continu) ou en plusieurs parties verticalement espacées (si discontinu), uniquement dans la moitié supérieure de la hauteur du vitrage ou en variante sur toute sa hauteur pour ledit ou chaque bord vertical avant ou arrière du vitrage.

On notera également que ce guidage permet d'éviter tout basculement du vitrage en cours de coulissement vers le haut au niveau d'une zone supérieure de ses bords verticaux.

Avantageusement, ledit au moins un coulisseau peut se terminer par un crochet qui est recourbé axialement vers l'extérieur et qui coulisse dans ladite rainure réalisée en au moins un matériau élastomère rigide, de sorte que l'amplitude du déplacement du vitrage soit contrôlée par le coulissement dudit crochet dans ladite rainure simultanément dans des directions axiale et longitudinale du véhicule.

Comme indiqué ci-dessus, on notera que c'est cette forme recourbée en extrémité du coulisseau combinée à la forme associée de la branche externe dudit au moins un brin ascendant incluant cette rainure rigide qui permet de maîtriser de manière satisfaisante l'amplitude des courts déplacements en X+ et X- du vitrage pendant son coulissement dans un plan vertical.

Encore plus avantageusement, ledit au moins un coulisseau peut comprendre une embase solidaire de ladite face interne du vitrage en deçà dudit au moins un bord vertical qui s'étend axialement vers l'intérieur, et qui se prolonge par une jambe s'étendant sensiblement dans la direction axiale au-delà dudit au moins un bord vertical et se terminant par ledit crochet.

On notera que le ou chaque coulisseau peut être réalisé en au moins un matériau métallique, plastique (e.g. thermoplastique, par en exemple en un polyamide) ou composite à matrice plastique, et que ce coulisseau peut être fixé par collage ou éventuellement soudé ou co-injecté dans le cas particulier où le vitrage est réalisé en un matériau plastique.

Selon un autre aspect de l'invention, le module comprend en outre ledit élément vertical en regard duquel coopèrent en coulissement ledit crochet et ladite rainure. De plus, une zone souple d'extrémité externe que comprend ladite branche axialement externe du joint et qui est appliquée à la fois contre une tranche verticale dudit élément vertical et contre ladite tranche verticale du vitrage peut avantageusement masquer tout jeu ou interstice de montage entre le vitrage et ledit élément vertical.

Selon un exemple de réalisation de l'invention, ledit au moins un coulisseau incorporant ledit crochet s'étend sensiblement sur toute la hauteur dudit au moins un bord vertical.

Avantageusement, ladite branche axialement interne du joint peut se terminer par une zone souple d'extrémité interne qui est montée de manière étanche sur ladite face interne du vitrage à l'écart desdits moyens de guidage et qui peut raccorder ledit au moins un brin ascendant audit brin supérieur avec une continuité de contact étanche sur ladite face interne du vitrage, avec les avantages mentionnés ci-dessus.

En résumé, on peut obtenir par ce module d'étanchéité selon l'invention une étanchéité continue pour ledit au moins un brin ascendant et ledit brin supérieur, tant sur la face externe que sur la face interne du vitrage.

D'autres caractéristiques, avantages et détails de la présente invention ressortiront à la lecture de la description suivante d'un exemple de réalisation de l'invention, donné à titre illustratif et non limitatif, la description étant réalisée en référence avec les dessins joints, parmi lesquels :
les figures 1a et 1b sont des vues latérales schématiques montrant respectivement une porte avant et une porte arrière d'un véhicule automobile de type berline pourvues de vitrages montés coulissants dans des joints de coulisse pouvant être selon l'invention,

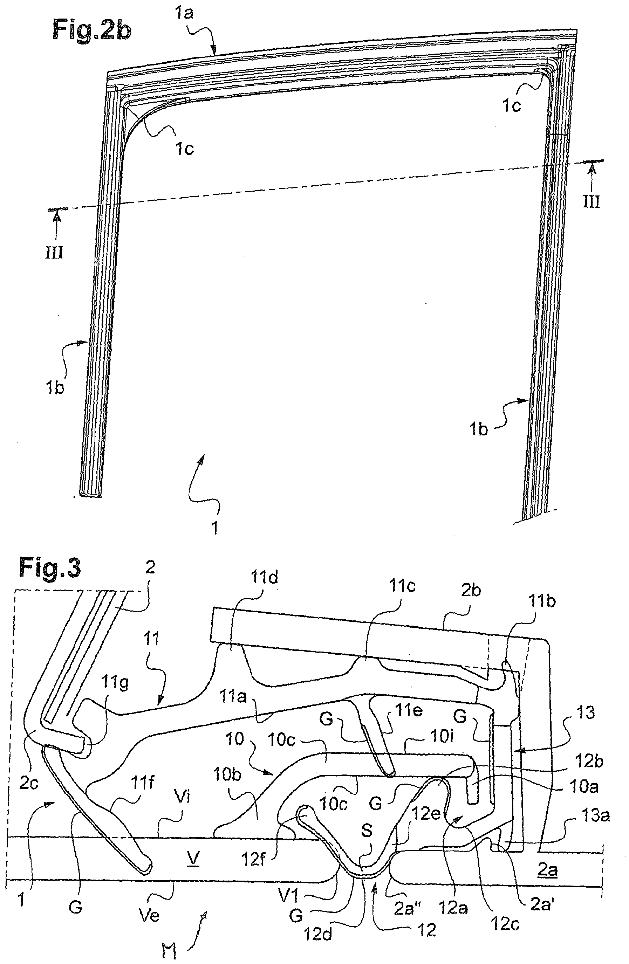

la figure 2 est une vue en coupe transversale suivant le plan II-II de la figure 1a d'un exemple de brin supérieur pour un joint de coulisse selon l'invention illustré, à l'état non contraint, monté sur un cadre de porte contre un vitrage de cette porte et une partie supérieure de la caisse du véhicule automobile,
la figure 2a est une vue en coupe transversale suivant le plan II-II de la figure 1a d'un autre exemple de brin supérieur pour un joint de coulisse selon l'invention illustré, à l'état non contraint, monté sur un cadre de porte contre un vitrage de cette porte et une partie supérieure de la caisse du véhicule automobile,
la figure 2b est une vue latérale d'un joint de coulisse selon une exemple de l'invention à deux brins ascendants reliés entre eux par un brin supérieur,

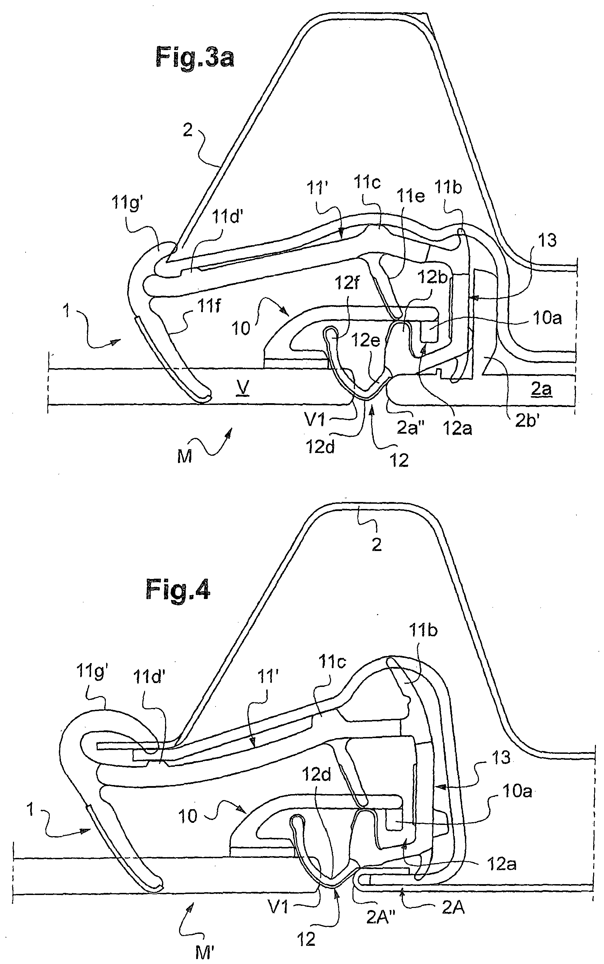

la figure 3 est une vue en coupe transversale suivant le plan III-III de la figure 2b d'un brin ascendant arrière selon l'invention de ce joint illustré, à l'état non contraint, monté selon un premier mode de réalisation de l'invention sur le cadre de porte contre ce vitrage et en affleurement contre un enjoliveur externe vertical formant un pied-milieu,
la figure 3a est une vue en coupe transversale suivant le plan III-III de la figure 2b d'un brin ascendant arrière selon une variante de la figure 3 monté selon ce premier mode sur ce cadre contre ce vitrage et en affleurement contre cet enjoliveur, et
la figure 4 est une vue en coupe transversale suivant le plan III-III de la figure 2b d'un brin ascendant arrière selon une variante des figures 3 et 3a correspondant à un second mode de montage selon l'invention de ce brin, sur un cadre de porte contre ce vitrage mais en affleurement avec un montant du cadre de porte lui-même.

Chaque joint de coulisse 1, 1' illustré aux figures 1a, 1b et 2b qui est monté sur un cadre (non visible) d'une porte avant P et/ou d'une porte arrière P' d'un véhicule automobile pour recevoir un vitrage avant V ou arrière V' lors de son coulissement ascendant et descendant dans la direction verticale Z du véhicule, comporte de manière usuelle :
- un brin supérieur 1a, 1a' sensiblement horizontal ou incliné s'étendant dans la direction longitudinale X du véhicule, et
- deux brins ascendants 1b, 1b' raccordés au brin supérieur 1a, 1a', par exemple par l'intermédiaire de courts raccords moulés 1c (visibles à la figure 2b).

La figure 1a montre également la direction latérale Y du véhicule définissant la profondeur axiale du module d'étanchéité M illustré aux figures 2 et 3, ce module M comprenant essentiellement :
- le joint de coulisse 1,
- le vitrage V de la porte monté coulissant dans le joint 1,
- des moyens de guidage 10 du vitrage V formés d'au moins un coulisseau solidaire d'une face interne Vi du vitrage à proximité immédiate d'au moins l'un de ses bords verticaux (i.e. notamment du bord vertical arrière dans l'exemple de la figure 3) et apte à guider le vitrage V en coulissement dans le joint 1 de manière déportée dans la direction X, et
- un enjoliveur externe vertical 2a du cadre 2 de la porte adjacent au vitrage V formant dans cet exemple un enjoliveur de pied-milieu 2a, avec la surface axialement externe de laquelle le vitrage V est monté en affleurement latéral (i.e. dans un même plan sensiblement vertical, appelé montage « flush » en anglais).

Dans l'exemple de la figure 2, le brin supérieur 1a comprend essentiellement de façon connue :
- une pince de fixation 3 à section droite en U dans laquelle est noyée une armature de renfort 4 par exemple métallique également à section droite en U,
- deux jambes dissymétriques 5 et 7 respectivement constituées d'une jambe principale axialement interne 5 et d'une jambe secondaire axialement externe 7 qui prolongent sensiblement à 90° une branche 3a de la pince 3 et qui se terminent par des lèvres d'étanchéité 9a et 9b aptes à venir en contact glissant avec les deux faces interne Vi et externe Ve du vitrage V, l'autre branche 3b de la pince 3 supportant des lèvres d'étanchéité 9c aptes à venir en contact avec la caisse du véhicule.

Plus précisément, la jambe interne 5 est pourvue :
- de deux lèvres internes 9a dont l'une, supérieure, appuie de manière étanche sur la tranche V1 du vitrage V et dont l'autre, inférieure, appuie sur la face interne Vi du vitrage V), et
- d'au moins une lèvre externe 9b appuyant sur la face externe Ve du vitrage V.

Dans la variante de la figure 2a, le brin supérieur 1a comprend essentiellement de façon connue :
- une pince de fixation 3' à section droite globalement en U mais dépourvue d'armature de renfort (la pince 3' est réalisée en un matériau très rigide par exemple à base d'un élastomère thermoplastique de type oléfinique - TPO en abrégé - ou bien à base d'une polyoléfine telle que du polypropylène - PP en abrégé - renforcée par une charge telle que du talc),
- deux jambes dissymétriques 5' et 7' analogues à celles de la figure 2 qui se terminent par des lèvres d'étanchéité 9a' et 9b similaires, l'autre branche 3b' de la pince 3' supportant des lèvres d'étanchéité 9c également similaires.

Plus précisément, la jambe interne 5' est pourvue :
- de trois lèvres internes 9a' (au lieu des deux lèvres 9a de la figure 2) dont l'une, supérieure, appuie de manière étanche sur la tranche V1 du vitrage V et dont deux lèvres inférieures 9a' appuient sur la face interne Vi du vitrage V, et
- d'au moins une lèvre externe 9b appuyant sur la face externe Ve du vitrage V.

Le module d'étanchéité illustré à la figure 3 par exemple pour le brin ascendant arrière 1b de la porte avant P pourvue du vitrage V et de l'enjoliveur de pied-milieu 2a est notamment caractérisé par la structure particulière suivante du joint de coulisse 1 selon l'invention pour ce brin ascendant 1b.

Le joint 1 est entièrement réalisé d'un seul tenant en matériaux élastomères de duretés différentes, et il présente globalement une forme de U asymétrique à deux branches axialement interne 11 et externe 12 qui s'étendent chacune sensiblement dans la direction longitudinale X en section transversale et qui sont reliées entre elles par une branche de liaison 13 axiale formant l'âme du U.

La branche interne 11 comprend essentiellement :
- une portion principale rigide 11a (par exemple à base d'un TPV rigide de type Vegaprene® pouvant présenter une dureté Shore D d'environ 45, à titre non limitatif) s'étendant sensiblement dans la direction X qui est montée sur une structure interne 2b par exemple en L de l'enjoliveur pied-milieu 2a par des saillies 11b, 11c, 11d dirigées axialement vers l'intérieur qu'il présente, dont une saillie déformable interne 11b qui est prévue à la manière d'une articulation à la jonction entre la branche de liaison 13 et la branche interne 11 et qui forme une lèvre d'accrochage à la structure 2b, et
- deux lèvres d'étanchéité internes souples 11e et 11f (par exemple à base d'un TPV souple également de type Vegaprene® et revêtues d'un revêtement glissant G par exemple en PER), qui comprennent :
   * une lèvre intermédiaire interne 11e qui s'étend axialement vers l'extérieur à partir d'un premier tiers environ de la longueur de la portion principale 11a à compter de la saillie déformable 11b et qui est conçue pour appuyer de manière étanche sur une face interne 10i du coulisseau de guidage 10, et
   * une lèvre d'extrémité interne 11f qui prolonge de manière oblique (inclinée vers la branche de liaison 13) l'extrémité de la portion principale 11a et qui est conçue pour appuyer de manière étanche sur la face interne Vi du vitrage V nettement en deçà du coulisseau de guidage 10, étant précisé que la jonction entre la portion principale 11a et la lèvre d'extrémité 11f forme une gorge 11g destinée à être montée sur une extrémité recourbée d'un enjoliveur interne 2c équipant le cadre de porte 2.

La branche de liaison 13 essentiellement rigide (par exemple à base d'un TPV rigide de type Vegaprene® tel que celui de la portion principale 11a de la branche interne 11) s'étend axialement vers l'extérieur à partir de la saillie déformable interne 11b jusqu'à une autre saillie déformable externe 13a formée d'une courte lèvre calée en appui contre la face interne de l'enjoliveur vertical externe 2a via une protubérance 2a' de cette face interne.

La branche externe 12 comprend essentiellement :
- une rainure axiale 12a dont un bord est formé par la branche de liaison 13 et l'autre bord par un bourrelet rigide 12b s'étendant en saillie axialement vers l'intérieur (dans cet exemple incliné légèrement vers la branche de liaison 13) et dont le fond 12c (dans cet exemple incliné vers le bourrelet 12b axialement vers l'extérieur) peut être recouvert d'un revêtement anti-friction G (par exemple également en PER, tout comme des revêtements G recouvrant le bourrelet 12b et la branche de liaison 13) pour recevoir en contact glissant un crochet 10a de guidage formant une extrémité libre recourbée du coulisseau 10, et
- une lèvre souple d'étanchéité externe 12d (par exemple, comme les lèvres d'étanchéité internes 11e et 11f et les saillies déformables interne 11b et externe 13a, à base d'un TPV souple de type Vegaprene® recouvert d'un revêtement glissant G par exemple en PER) qui forme l'extrémité libre de la branche externe 12 à partir du bourrelet rigide 12b et qui comprend :
   * une première portion oblique 12e qui est incurvée axialement vers l'extérieur jusqu'à un sommet externe S arrondi de la lèvre 12d sensiblement situé au repos dans le plan médian du vitrage V et de l'enjoliveur 2a, et qui est conçue pour être montée de manière étanche au contact d'une tranche verticale 2a" de l'enjoliveur externe 2a, et
   * une seconde portion oblique d'extrémité 12f qui prolonge la première portion 12e en étant incurvée axialement vers l'intérieur à partir du sommet externe S et qui est conçue pour être montée en biais de manière étanche au contact d'une partie axialement interne de la tranche verticale V1 du vitrage V en se terminant vers l'intérieur et en regard de la face interne Vi du vitrage V.

Le ou chaque coulisseau 10 de guidage déporté est réalisé par exemple en un matériau plastique tel qu'un polyamide, s'étend au moins sur une zone supérieure du bord vertical adjacent du vitrage V, et comprend :
- une embase élargie 10b qui est solidaire de la face interne Vi du vitrage V en deçà de ce bord et qui s'étend axialement vers l'intérieur de manière inclinée vers la branche de liaison 13 dans cet exemple, et
- une jambe axiale 10c qui prolonge l'embase 10b de manière déportée dans la direction X, contre laquelle appuient la lèvre intermédiaire interne 11e (sur la face interne 10i de la jambe 10c) et le bourrelet 12b (sur la face externe 10e de la jambe 10c à proximité de son extrémité libre), et qui se termine par le crochet axial 10a recourbé axialement vers l'extérieur.

Dans la variante de la figure 3a, le joint 1 illustré par l'un au moins de ses deux brins ascendants 1b se distingue essentiellement de celui de la figure 3 par la géométrie de sa branche axialement interne 11' qui est ici montée sur sensiblement toute sa longueur contre le cadre de porte 2 lui-même en épousant quasiment son profil, alors qu'à la figure 3 l'enjoliveur était monté contre une structure 2b en « L » prolongeant l'enjoliveur 2a axialement vers l'intérieur.

Plus précisément, la branche interne 11' se termine par une portion 11g' qui est recourbée vers la branche de liaison 13 et qui appuie contre un bord du cadre 2, en lieu et place de la gorge 11g. De plus, la branche interne 11' présente une troisième saillie 11d' qui est montée contre le cadre 2 en étant formée à proximité immédiate de cette portion recourbée 11g', juste en deçà de cette dernière.

On voit à la figure 3a que l'enjoliveur 2a se prolonge axialement vers l'intérieur uniquement par une structure axiale 2b' qui est coincée entre la branche de liaison 13 et une portion axiale du cadre 2.

Dans le second mode de montage de la figure 4, un joint 1 analogue à celui de la figure 3a est monté en affleurement latéral avec la surface axialement externe d'un montant 2A de bordure du cadre de porte 2 lui-même (et non en affleurement avec un enjoliveur vertical externe 2a comme cela est le cas pour les figures 3 et 3a). On voit à la figure 4 que le joint 1 est monté de manière étanche par l'un au moins de ses deux brins ascendants 1b à la fois contre la tranche 2A" du montant 2A et la tranche V1 du vitrage V.

Il convient de noter que la lèvre d'étanchéité externe 12d et la lèvre d'étanchéité interne 11f dudit au moins un brin ascendant 1b peuvent avantageusement se raccorder via le raccord d'angle 1C (par exemple moulé) respectivement à la lèvre d'étanchéité externe 9b et à une lèvre d'étanchéité interne 9a du brin supérieur 1a, ce qui permet d'obtenir une étanchéité continue assurée pour le ou chaque brin ascendant 1b et le brin supérieur 1a, tant sur la face externe Ve que sur la face interne Vi du vitrage V.

Il convient également de noter que la lèvre d'extrémité externe 12d qui est appliquée à la fois, d'une part, contre la tranche verticale 2a" de l'enjoliveur vertical externe 2a (premier mode des figures 3 ou 3a) ou bien contre la tranche verticale 2A" du montant de bordure 2A du cadre 2 (second mode de la figure 4),et, d'autre part, contre la tranche verticale V1 du vitrage V, permet de masquer tout jeu ou interstice de montage entre le vitrage V et l'enjoliveur 2a ou bien le montant de cadre 2A selon le cas.

Et comme expliqué précédemment, le crochet 10a du coulisseau 10 combiné à la forme spécifique de la branche externe 12 incluant la rainure rigide 12a permet de maîtriser de manière satisfaisante l'amplitude des déplacements en X+ et X- du vitrage V pendant son coulissement dans un plan vertical.

## Revendications

1. Joint de coulisse (1, 1') élastomère adapté pour recevoir un vitrage (V) coulissant d'une porte latérale (P, P') de véhicule automobile, le vitrage étant monté en affleurement latéral avec une surface externe d'un élément vertical de bordure (2A, 2a) d'un cadre (2) de la porte adjacent au vitrage choisi parmi un montant (2A) dudit cadre et un enjoliveur externe vertical (2a) équipant ledit cadre, le joint comprenant au moins un brin ascendant (1b, 1b') et un brin supérieur (1a, 1a'), ledit au moins un brin ascendant présentant d'un seul tenant une branche axialement externe (12) apte à être montée d'une manière étanche au contact dudit élément vertical et d'une tranche verticale (V1) du vitrage, une branche axialement interne (11, 11') apte à être montée sur ledit cadre, et une branche de liaison (13) reliant ladite branche axialement externe à ladite branche axialement interne, le joint comprenant une rainure (12a) apte à recevoir en coulissement vertical des moyens de guidage (10) du vitrage solidaires d'une face interne (Vi) du vitrage, ladite branche axialement externe (12) comprenant au-delà de ladite rainure (12a) une zone souple d'extrémité externe (12d) apte à être montée en contact étanche contre une tranche verticale (V1) du vitrage (V), de sorte que ladite zone souple d'extrémité externe masque tout jeu ou interstice de montage entre le vitrage et ledit élément vertical (2A, 2a),
ladite rainure (12a) est formée sur ladite branche axialement externe en étant adaptée pour se trouver en regard dudit élément vertical, **caractérisé en ce que** ladite rainure (12a) s'étend de manière sensiblement axiale en étant formée d'au moins un matériau élastomère rigide entre ladite branche de liaison (13) et une zone rigide d'appui (12b) que comprend ladite branche axialement externe (12) et qui est située en deçà de ladite zone souple d'extrémité externe (12d), ladite zone rigide d'appui faisant saillie axialement vers l'intérieur et étant apte à appuyer de manière étanche sur une face axialement externe (10e) desdits moyens de guidage (10).

2. Joint de coulisse (1, 1') selon la revendication 1, **caractérisé en ce que** ladite zone souple d'extrémité externe (12d) prolonge ladite zone rigide d'appui (12b) en formant une lèvre d'étanchéité externe qui comprend :
- une première portion (12e) qui est dirigée axialement vers l'extérieur et qui est apte à être montée de manière étanche au contact d'une tranche verticale (2A", 2a") dudit élément vertical (2A, 2a), et
- une seconde portion d'extrémité (12f) qui est dirigée axialement vers l'intérieur et qui est apte à être montée de manière étanche au contact de ladite tranche verticale (V1) du vitrage (V).

3. Joint de coulisse (1, 1') selon la revendication 2, **caractérisé en ce que** ladite zone souple d'extrémité externe (12d) n'est pas apte à être montée au contact d'une face externe (Ve) du vitrage (V).

4. Joint de coulisse (1, 1') selon une des revendications 1 à 3, **caractérisé en ce que** ladite zone rigide d'appui comprend un bourrelet (12b) axial qui forme avec ladite branche de liaison (13) également axiale des bords de ladite rainure (12a), laquelle est apte à recevoir en coulissement un crochet terminal (10a) desdits moyens de guidage (10) et comprend un fond (12c) optionnellement recouvert d'un revêtement anti-friction (G).

5. Joint de coulisse (1, 1') selon une des revendications précédentes, **caractérisé en ce que** ladite branche axialement externe (12) est apte à coopérer de manière déportée dans la direction longitudinale (X) du véhicule avec lesdits moyens de guidage (10) pour guider simultanément le coulissement du vitrage (V) dans une direction axiale (Y) du véhicule et dans ladite direction longitudinale.

6. Joint de coulisse (1, 1') selon une des revendications précédentes, **caractérisé en ce que** le joint présente globalement une forme de U asymétrique, et **en ce que** ladite branche axialement interne (11, 11') se termine par une zone souple d'extrémité interne (11f) qui est apte à être montée de manière étanche sur ladite face interne (Vi) du vitrage (V) à l'écart desdits moyens de guidage (10) et qui raccorde ledit au moins un brin ascendant (1b, 1b') audit brin supérieur (1a, 1a') avec une continuité de contact étanche sur ladite face interne du vitrage en dépit de la présence desdits moyens de guidage.

7. Joint de coulisse (1, 1') selon la revendication 6, **caractérisé en ce que** ladite zone souple d'extrémité interne comprend une lèvre d'étanchéité interne (11f) qui s'étend de manière oblique en direction de ladite branche de liaison (13) à partir d'une portion (11g, 11g') de ladite branche axialement interne (11, 11') apte à être montée sur ledit cadre (2) de la porte (P, P'), ladite portion comprenant par exemple une gorge (11g) destinée à être montée sur un enjoliveur interne (2c) dudit cadre de porte ou bien étant recourbée directement contre ledit cadre.

8. Module d'étanchéité (M, M') d'une porte latérale (P, P') de véhicule automobile comprenant un joint de coulisse (1, 1'), un vitrage (V) de ladite porte monté coulissant dans le joint et des moyens de guidage (10) du vitrage qui sont solidaires d'une face interne (Vi) du vitrage à proximité d'au moins un bord vertical du vitrage et qui sont aptes à guider le vitrage de manière longitudinalement déportée en coulissement directement dans une rainure (12a) formée dans le joint, de sorte que le vitrage soit apte à être monté en affleurement latéral avec une surface externe d'un élément vertical de bordure (2A, 2a) d'un cadre (2) de la porte adjacent au vitrage choisi parmi un montant (2A) dudit cadre et un enjoliveur externe vertical (2a) équipant ledit cadre, **caractérisé en ce que** le joint est tel que défini à l'une des revendications précédentes.

9. Module d'étanchéité (M, M') selon la revendication 8, **caractérisé en ce que** lesdits moyens de guidage (10) sont formés d'au moins un coulisseau s'étendant de manière continue ou discontinue à partir de ladite face interne (Vi) du vitrage (V) sur au moins une zone supérieure dudit au moins un bord vertical, le vitrage comprenant une tranche verticale (V1) qui n'est pas recouverte par ledit au moins un coulisseau et contre laquelle est appliquée de manière étanche ladite branche axialement externe (12) du joint (1, 1').

10. Module d'étanchéité (M, M') selon la revendication 9, **caractérisé en ce que** ledit au moins un coulisseau (10) se termine par un crochet (10a) qui est recourbé axialement vers l'extérieur et qui coulisse dans ladite rainure (12a) réalisée en au moins un matériau élastomère rigide, de sorte que l'amplitude du déplacement du vitrage (V) soit contrôlée par le coulissement dudit crochet dans ladite rainure simultanément dans des directions axiale (Y) et longitudinale (X) du véhicule.

11. Module d'étanchéité (M, M') selon la revendication 10, **caractérisé en ce que** ledit au moins un coulisseau (10) comprend une embase (10b) solidaire de ladite face interne (Vi) du vitrage (V) en deçà dudit au moins un bord vertical qui s'étend axialement vers l'intérieur, et qui se prolonge par une jambe (10c) s'étendant sensiblement dans la direction axiale au-delà dudit au moins un bord vertical et se terminant par ledit crochet (10a).

12. Module d'étanchéité (M, M') selon la revendication 10 ou 11, **caractérisé en ce que** le module comprend en outre ledit élément vertical (2A, 2a) en regard duquel coopèrent en coulissement ledit crochet (10a) et ladite rainure (12a), une zone souple d'extrémité externe (12d) que comprend ladite branche axialement externe (12) du joint (1, 1') et qui est appliquée à la fois contre une tranche verticale (2A", 2a") dudit élément vertical et contre ladite tranche verticale (V1) du vitrage (V) masquant tout jeu ou interstice de montage entre le vitrage et ledit élément vertical.

13. Module d'étanchéité (M, M') selon une des revendications 10 à 12, **caractérisé en ce que** ledit au moins un coulisseau (10) incorporant ledit crochet (10a) s'étend sensiblement sur toute la hauteur dudit au moins un bord vertical.

14. Module d'étanchéité (M, M') selon une des revendications 8 à 13, **caractérisé en ce que** ladite branche axialement interne (11, 11') du joint (1, 1') se termine par une zone souple d'extrémité interne (11f) qui est montée de manière étanche sur ladite face interne (Vi) du vitrage (V) à l'écart desdits moyens de guidage (10) et qui raccorde ledit au moins un brin ascendant (1b, 1b') audit brin supérieur (1a, 1a') avec une continuité de contact étanche sur ladite face interne du vitrage.

## Patentansprüche

1. Elastomer-Gleitdichtungselement (1, 1') zur Aufnahme einer gleitenden Glasscheibe (V) einer Kraftfahrzeugseitentür (P, P'), wobei die Glasscheibe seitlich bündig mit einer Außenfläche eines senkrechten Kantenelements (2A, 2a) einer Einfassung (2) der an die Glasscheibe angrenzenden Tür montiert ist, ausgewählt aus einer Stütze (2A) der Einfassung und einer senkrechten äußeren, an der Einfassung angebrachten Zierleiste (2a), wobei die Dichtung mindestens einen aufsteigenden Strang (1b, 1b') und einen oberen Strang (1a, 1a') umfasst, wobei der mindestens eine aufsteigende Strang in einem Stück einen axial äußeren Zweig (12), der in abdichtender Weise in Kontakt mit dem senkrechten Element und einer senkrechten Schmalseite (V1) der Glasscheibe montierbar ist, einen axial inneren Zweig (11, 11'), der an die Einfassung montierbar ist, und einen Verbindungszweig (13), der den axial äußeren Zweig mit dem axial inneren Zweig verbindet, aufweist, wobei die Dichtung eine Nut (12a) umfasst, die befähigt ist, senkrecht gleitend Führungsmittel (10) der Glasscheibe aufzunehmen, welche mit einer Innenseite (Vi) der Glasscheibe fest verbunden sind, wobei der axial äußere Zweig (12) neben der Nut (12a) einen flexiblen äußeren Endbereich (12d) aufweist, der in dichtem Kontakt gegen eine vertikale Schmalseite (V1) der Glasscheibe (V) montierbar ist, so dass der flexible äußere Endbereich jedweden Abstand oder Montagespalt zwischen der Glasscheibe und dem senkrechten Element (2A, 2a) verdeckt,
wobei die Nut (12a) an dem axial äußeren Zweig in angepasster Weise ausgebildet ist, um dem senkrechten Element zugewandt zu sein, **dadurch gekennzeichnet, dass** sich die Nut (12a) im Wesentlichen axial erstreckt, wobei sie aus mindestens einem starren Elastomer-Material zwischen dem Verbindungszweig (13) und einem starren Auflagebereich (12b) gebildet ist, der Teil des axial äußeren Zweiges (12) ist und der unterhalb des flexiblen äußeren Endbereichs (12d) angeordnet ist, wobei der starre Auflagebereich axial nach innen vorsteht und befähigt ist, in abdichtender Weise auf eine axial äußere Fläche (10e) der Führungsmittel (10) zu drücken.

2. Gleitdichtungselement (1, 1') nach Anspruch 1, **dadurch gekennzeichnet, dass** der flexible äußere Endbereich (12d) den starren Auflagebereich (12b) unter Ausbildung einer äußeren Dichtlippe fortsetzt, die umfasst:
- einen ersten Abschnitt (12e), der axial nach außen gerichtet ist und der in abdichtender Weise in Kontakt mit einer senkrechten Schmalseite (2A", 2a") des senkrechten Elements (2A, 2a) montierbar ist und
- einen zweiten Endabschnitt (12f), der axial nach innen gerichtet ist und der in abdichtender Weise in Kontakt mit der senkrechten Schmalseite (V1) der Glasscheibe (V) montierbar ist.

3. Gleitdichtungselement (1, 1') nach Anspruch 2, **dadurch gekennzeichnet, dass** der flexible äußere Endbereich (12d) nicht in Kontakt mit einer Außenseite (Ve) der Glasscheibe (V) montierbar ist.

4. Gleitdichtungselement (1, 1') nach einem der Ansprüche 1 bis 3, **dadurch gekennzeichnet, dass** der starre Auflagebereich eine axiale Wulst (12b) umfasst, die mit dem ebenfalls axialen Verbindungszweig (13) Ränder der Nut (12a) bildet, welche befähigt ist, einen Endhaken (10a) der Führungsmittel (10) gleitend aufzunehmen und einen Boden (12c) umfasst, der optional mit einer Gleitbeschichtung (G) überzogen ist.

5. Gleitdichtungselement (1, 1') nach einem der vorhergehenden Ansprüche, **dadurch gekennzeichnet, dass** der axial äußere Zweig (12) befähigt ist, in der Längsrichtung (X) des Fahrzeugs versetzt mit den Führungsmitteln (10) zusammenzuwirken, um gleichzeitig das Gleiten der Glasscheibe (V) in einer axialen Richtung (Y) des Fahrzeugs und in der Längsrichtung zu führen.

6. Gleitdichtungselement (1, 1') nach einem der vorhergehenden Ansprüche, **dadurch gekennzeichnet, dass** das Dichtungselement allgemein eine asymmetrische U-Form aufweist, und dadurch, dass der axial innere Zweig (11, 11') mit einem flexiblen inneren Endbereich (11f) endet, der in abdichtender Weise an der Innenseite (Vi) der Glasscheibe (V) von den Führungsmitteln (10) entfernt montierbar ist und der den mindestens einen aufsteigenden Strang (1b, 1b') in kontinuierlich dichtem Kontakt an der Innenseite der Glasscheibe trotz der vorhandenen Führungsmittel mit dem oberen Strang (1a, 1a') verbindet.

7. Gleitdichtungselement (1, 1') nach Anspruch 6, **dadurch gekennzeichnet, dass** der flexible innere Endbereich eine innere Dichtlippe (11f) umfasst, die sich von einem Abschnitt (11g, 11g') des axial inneren Zweiges (11, 11'), der an der Einfassung (2) der Tür (P, P') montierbar ist, schräg in Richtung des Verbindungszweigs (13) erstreckt, wobei der Abschnitt beispielsweise eine Kehle (11g) umfasst, die dazu bestimmt ist, an einer inneren Zierleiste (2c) der Türeinfassung angebracht zu sein oder direkt gegen die Einfassung gekrümmt ist.

8. Dichtungsmodul (M, M') einer Kraftfahrzeugseitentür (P, P') mit einem Gleitdichtungselement (1, 1'), einer Glasscheibe (V) der Tür, die gleitend in der Dichtung montiert ist, und Führungsmitteln (10) der Glasscheibe, die mit einer Innenseite (Vi) der Glasscheibe nahe mindestens einer senkrechten Kante der Glasscheibe fest verbunden sind und die befähigt sind, die Glasscheibe längs versetzt gleitend direkt in einer in der Dichtung ausgebildeten Nut (12a) zu führen, so dass die Glasscheibe seitlich bündig mit einer Außenfläche eines senkrechten Kantenelements (2A, 2a) einer Einfassung (2) der an die Glasscheibe angrenzenden Tür montierbar ist, ausgewählt aus einer Stütze (2A) der Einfassung und einer senkrechten äußeren, an der Einfassung angebrachten Zierleiste (2a), **dadurch gekennzeichnet, dass** die Dichtung nach einem der vorhergehenden Ansprüche ist.

9. Dichtungsmodul (M, M') nach Anspruch 8, **dadurch gekennzeichnet, dass** die Führungsmittel (10) aus mindestens einem Schieber gebildet sind, der sich kontinuierlich oder diskontinuierlich von der Innenseite (Vi) der Glasscheibe (V) über mindestens einen oberen Bereich der mindestens einen senkrechten Kante erstreckt, wobei die Glasscheibe eine senkrechte Schmalseite (V1) umfasst, die nicht von dem mindestens einen Schieber bedeckt ist und gegen die der axial äußere Zweig (12) der Dichtung (1, 1') in abdichtender Weise anliegt.

10. Dichtungsmodul (M, M') nach Anspruch 9, **dadurch gekennzeichnet, dass** der mindestens eine Schieber (10) mit einem Haken (10a) endet, der axial nach außen gekrümmt ist und der in der Nut (12a) gleitet, welche aus mindestens einem starren Elastomer-Material gebildet ist, so dass die Amplitude der Verlagerung der Glasscheibe (V) durch das Gleiten des Hakens in der Nut gleichzeitig in axialer (Y) und Längsrichtung (X) des Fahrzeugs gesteuert wird.

11. Dichtungsmodul (M, M') nach Anspruch 10, **dadurch gekennzeichnet, dass** der mindestens eine Schieber (10) eine Basis (10b) umfasst, die mit der Innenseite (Vi) der Glasscheibe (V) unterhalb der mindestens einen senkrechten Kante fest verbunden ist, die sich axial nach innen erstreckt und die sich in einem Schenkel (10c) fortsetzt, der sich im Wesentlichen in der axialen Richtung über die mindestens eine senkrechte Kante hinaus erstreckt und in dem Haken (10a) endet.

12. Dichtungsmodul (M, M') nach Anspruch 10 oder 11, **dadurch gekennzeichnet, dass** das Modul neben dem senkrechten Element (2A, 2a), dem gegenüber der Haken (10a) und die Nut (12a) gleitend zusammenwirken, einen flexiblen äußeren Endbereich (12d) umfasst, der den axial äußeren Zweig (12) der Dichtung (1, 1') umfasst und der zugleich an einer senkrechten Schmalseite (2A", 2a") des senkrechten Elements und an der senkrechten Schmalseite (V1) der Glasscheibe (V) anliegt, wodurch jedweder Abstand oder Montagespalt zwischen der Glasscheibe und dem senkrechten Element verdeckt wird.

13. Dichtungsmodul (M, M') nach einem der Ansprüche 10 bis 12, **dadurch gekennzeichnet, dass** sich der mindestens eine Schieber (10), der den Haken (10a) enthält, im Wesentlichen über die gesamte Höhe der mindestens einen senkrechten Kante erstreckt.

14. Dichtungsmodul (M, M') nach einem der Ansprüche 8 bis 13, **dadurch gekennzeichnet, dass** der axial innere Zweig (11, 11') der Dichtung (1, 1') mit einem flexiblen inneren Endbereich (11f) endet, der in abdichtender Weise an der Innenseite (Vi) der Glasscheibe (V) von den Führungsmitteln (10) entfernt montiert ist und der den mindestens einen aufsteigenden Strang (1b, 1b') in kontinuierlich dichtem Kontakt an der Innenseite der Glasscheibe mit dem oberen Strang (1a, 1a') verbindet.

## Claims

1. An elastomer run seal (1, 1') suitable for receiving a sliding window (V) of a motor vehicle side door (P, P'), the window being mounted laterally flush with an outer surface of a vertical edge element (2A, 2a) of a frame (2) of the door adjacent to the window chosen from among an upright (2A) of said frame and a vertical outer trim (2a) equipping said frame, the seal comprising at least an ascending strand (1b, 1b') and a top strand (1a, 1a'), said at least one ascending strand having, in a single piece, an axially outer branch (12) able to be mounted sealably in contact with said vertical element and a vertical edge (V1) of the window, an axially inner branch (11, 11') able to be mounted on said frame, and a connecting branch (13) connecting said axially outer branch to said axially inner branch, the seal comprising a groove (12a) able to receive, by vertical sliding, means (10) for guiding the window secured to an inner face (Vi) of the window, said axially outer branch (12) comprising, past said groove (12a), a flexible outer end zone (12d) able to be mounted in sealed contact against a vertical edge (V1) of the window (V), such that said flexible outer end zone hides any mounting play or interstitial space between the window and said vertical element (2A, 2a), said groove (12a) is formed on said axially outer branch while being suitable for being found across from said vertical element, **characterized in that** said groove (12a) extends substantially axially while being formed from at least one rigid elastomer material between said connecting branch (13) and a rigid bearing zone (12b) comprised by said axially outer branch (12) and that is situated below said flexible outer end zone (12d), said rigid bearing zone protruding axially inward and being able to press sealably on an axially outer face (10e) of said guide means (10).

2. The run seal (1, 1') according to claim 1, characterize din that said flexible outer end zone (12d) extends said rigid bearing zone (12b) by forming an outer sealing lip that comprises:
- a first portion (12e) that is oriented axially outward and that is able to be mounted sealably in contact with a vertical edge (2A", 2a") of said vertical element (2A, 2a), and
- a second end portion (12f) that is oriented axially inward and that is able to be mounted sealably in contact with said vertical edge (V1) of the window (V).

3. The run seal (1, 1') according to claim 2, **characterized in that** said flexible outer end zone (12d) is not able to be mounted in contact with an outer face (Ve) of the window (V).

4. The run seal (1, 1') according to one of claims 1 to 3, **characterized in that** said rigid bearing zone comprises an axial bead (12b) that forms, with said connecting branch (13), which is also axial, edges of said groove (12a), which is able to slidingly receive an end hook (10a) of said guide means (10) and comprises a bottom (12c) optionally covered with an anti-friction coating (G).

5. The run seal (1, 1') according to one of the preceding claims, **characterized in that** said axially outer branch (12) is able to cooperate in an offset manner in the longitudinal direction (X) of the vehicle with said guide means (10) to simultaneously guide the sliding of the window (V) in an axial direction (Y) of the vehicle and in said longitudinal direction.

6. The run seal (1, 1') according to one of the preceding claims, **characterized in that** the seal has a globally asymmetrical U shape, and said axially inner branch (11, 11') ends with a flexible inner end zone (11f) that is able to be mounted sealably on said inner face (Vi) of the window (V) separated from said guide means (10) and that connects said at least one ascending strand (1b, 1b') to said top strand (1a, 1a') with continuous sealed contact over said inner face of the window despite the presence of said guide means.

7. The run seal (1, 1') according to claim 6, **characterized in that** said flexible inner end zone comprises an inner sealing lip (11f) that extends obliquely toward said connecting branch (13) from a portion (11g, 11g') of said axially inner branch (11, 11') able to be mounted on said frame (2) of the door (P, P'), said portion for example comprising a recess (11g) intended to be mounted on an inner trim (2c) of said door frame or being curved directly against said frame.

8. A sealing module (M, M') for a motor vehicle side door (P, P') comprising a run seal (1, 1'), a window (V) of said door mounted sliding in the seal and means (10) for guiding the window that are secured to an inner face (Vi) of the window near at least one vertical edge of the window and that are able to guide the window slidingly in a longitudinally offset manner directly in a groove (12a) formed in the seal, such that the window is able to be mounted laterally flush with an outer surface of a vertical edge element (2A, 2a) of a frame (2) of the door adjacent to the window chosen from among an upright (2A) of said frame and a vertical outer trim (2a) equipping said frame, **characterized in that** the seal is as defined in one of the preceding claims.

9. The sealing module (M, M') according to claim 8, **characterized in that** said guide means (10) are formed by at least one slide extending continuously or discontinuously from said inner face (Vi) of the window (V) over at least one upper zone of said at least one vertical edge, the window comprising a vertical edge (V1) that is advantageously not covered by said at least one slide and against which said axially outer branch (12) of the seal (1, 1') is sealably applied.

10. The sealing module (M, M') according to claim 9, **characterized in that** said at least one slide (10) ends with a hook (10a) that is curved axially outward and that slides in said groove (12a) made from at least one rigid elastomer material, such that the amplitude of the movement of the window (V) is controlled by the sliding of said hook in said groove simultaneously in axial (Y) and longitudinal (X) directions of the vehicle.

11. The module (M, M') according to claim 10, **characterized in that** said at least one slide (10) may comprise a base (10b) secured to said inner face (Vi) of the window (V) below said at least one vertical edge that extends axially inward, and that is extended by a leg (10c) extending substantially in the axial direction past said at least one vertical edge and ending with said hook (10a).

12. The sealing module (M, M') according to claim 10 or 11, **characterized in that** the module further comprises said vertical element (2A, 2a) across from which said hook 10a) and said groove (12a) cooperate by sliding, a flexible outer end zone (12d) comprised by said axially outer branch (12) of the seal (1, 1') and that is pressed both against a vertical edge (2A", 2a") of said vertical element and against said vertical edge (V1) of the window (V) conceals any mounting play or interstitial space between the window and said vertical element.

13. The sealing module (M, M') according to one of claims 10 to 12, **characterized in that** said at least one slide (10) incorporating said hook (10a) extends substantially over the entire height of said at least one vertical edge.

14. The sealing module (M, M') according to one of claims 8 to 13, **characterized in** said axially inner branch (11, 11') of the seal (1, 1') ends with a flexible inner end zone (11f) that is mounted sealably on said inner face (Vi) of the window (V) separated from said guide means (10) and that connects said at least one ascending strand (1b, 1b') to said top strand (1a, 1a') with continuous sealed contact over said inner face of the window.
